Europäisches Patentamt

European Patent Office

Office européen des brevets

(11) Publication number : **0 601 862 A1**

# (12) EUROPEAN PATENT APPLICATION

(21) Application number : 93309923.6

(22) Date of filing : 09.12.93

(51) Int. Cl.⁵ : **G11B 7/00, G02B 27/28, G11B 11/10, G11B 7/135**

(30) Priority : 09.12.92 JP 352091/92
03.02.93 JP 16492/93
19.04.93 JP 115349/93

(43) Date of publication of application :
15.06.94 Bulletin 94/24

(84) Designated Contracting States :
DE FR GB IT

(71) Applicant : OMRON CORPORATION
20, Igadera Shimokaiinji
Nagaokakyo-city Kyoto 617 (JP)

(72) Inventor : Yasuda, Naru
61-31 Minamiotiai,
Makisima-cho
Uji-city, Kyoto 611 (JP)

Inventor : Tomita, Kouhei
C. H-heights 302, 1-39 1 choume, Baba
Nagaokakyo-city, Kyoto 617 (JP)
Inventor : Hosokawa, Hayami
B46-804, 3-1 Otokoyama-hachibou
Yawata-city, Kyoto 614 (JP)
Inventor : Kiyomoto, Hironobu
2-213, 2 choume Sakyou Nara-city
Nara 631 (JP)
Inventor : Otsuki, Shinya
Takenoshita,
15-105 Okukaiinji
Nagaokakyo-city, Kyoto 617 (JP)

(74) Representative : Calderbank, Thomas Roger et al
MEWBURN ELLIS
York House
23 Kingsway
London WC2B 6HP (GB)

(54) An optical device formed of multiple film layers.

(57) Objective : To minimize the dependency of reflectivity and phase shift on angle of incidence in a beam splitter within the optical head of a device to record and reproduce optical data.
Configuration : A conductive multilayer film (53) is sandwiched between two wafers (51,52). This film (53) is composed of three materials whose refractive indices differ, $TiO_2$ (53a), $Al_2O_3$ (53B), and $MgF_2$ (53c), and others which are stacked one atop the other to create multiple Brewster angles.

EP 0 601 862 A1

Field Of The Invention

This invention relates to an optical device, such as a beam splitter in an optical head which splits the light reflected by an optical recording medium. More specifically, it pertains to a beam splitter whose characteristics in respect to reflectivity or transmissivity, and phase shift between the P and S polarized components are not strongly dependent on the angle of incidence. This invention also concerns various optical devices to record and reproduce optical data which uses this beam splitter.

Background Of The Invention

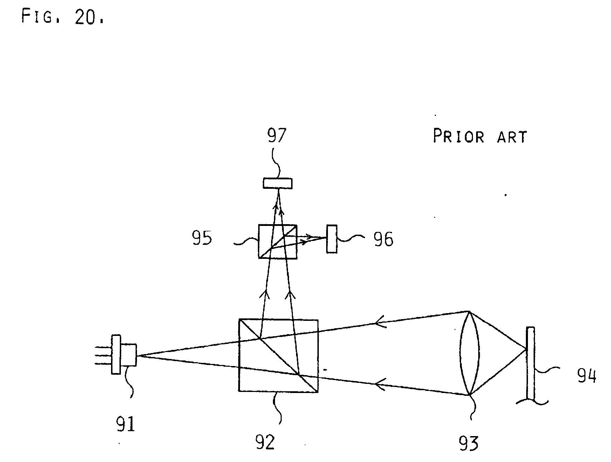

An existing device to record and reproduce optical data in which the beam splitter ("BS") is placed on a non-parallel part of the optical path is configured as shown in Fig. 20. In this figure, the non-parallel light emitted by the luminous element 91 (e.g. laser diode "LD") serving as a light source passes through the first beam splitter 92, and is condensed on disk 94 by object lens 93. The light reflected by disk 94 is again reflected by beam splitter 92, after which it is polarized and split by the second beam splitter 95. The reflected light is condensed onto photodiode detector 96 ("PD"), the first means to receive light. This photodiode is used to detect regenerated signals. The transmitted light is condensed onto PD 97, the second means to receive light. The photodiode detector 96 is used to detect errors. In this configuration, the light reflected by disk 94 strikes beam splitter 92 at an angle of incidence within a specified range. However, until now due consideration has not been given to the differences in reflectivity and transmissivity resulting from variations in the angles of incidence in the system, and to phase shifts also occurring.

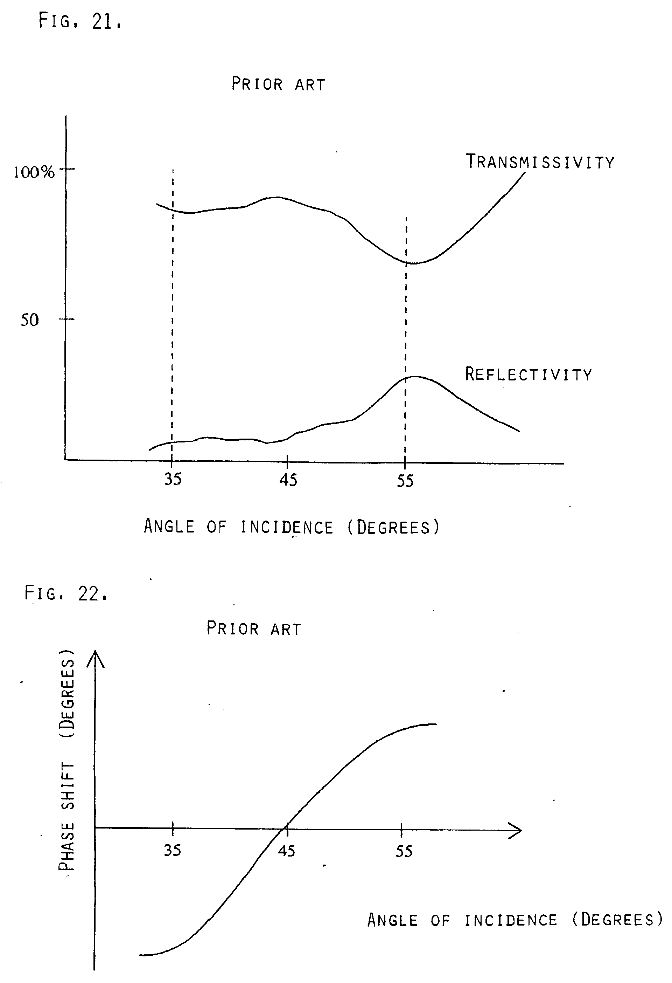

In Fig. 21, the conventional beam splitter has different transmissivity and reflectivity depending on the angle of incidence at which the light strikes the beam splitter. For example, light striking the beam splitter at an angle of incidence of 55° will have a higher reflectivity than light striking the beam splitter at an angle of 35°. The intensity distribution of the light striking the photodiode detector will be non-uniform and the error signal will be asymmetric resulting in an offset, and the sensitivity will be reduced. The light that passes through the beam splitter and strikes the disk also has a non-uniform intensity distribution. This makes the shape of the beam contacting the disk asymmetrical, and causes the regenerated signal to vary.

If the laser diode 1 emits linearly polarized light, the characteristic reflectivity $R_P$ of the component of the light striking beam splitter 2 along the path of polarization will be approximately 20%, while the reflectivity $R_S$ of the component perpendicular to the path of polarization will be approximately 100%. In this situation, designers of existing beam splitters paid attention only to the phase shift for an angle of incidence not far off the optical axis, that is, an angle of incidence of 45°. This phase shift was kept virtually zero, however, for light striking at other angles of incidence, generated phase shifts are strongly dependent on the angle of incidence as can be seen in Fig. 22. For beam splitters placed on a non-parallel part of the optical path, significant generation of phase shifts is problematical.

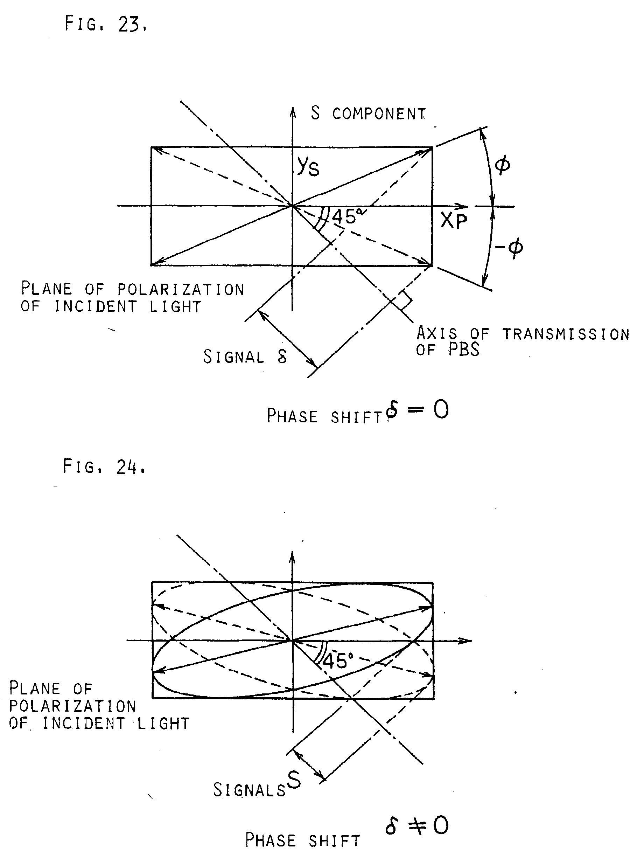

In the device shown in Fig. 20, the regenerated signals are handled as follows. The beams polarized and split by beam splitter 5 are received by photodiode detectors 6 and 7, respectively. The photodiode detector 6 detects $B_{1P}$ and $B_{2P}$ and the photodiode detector 7 detects $B_{1S}$ and $B_{2S}$. The beam $B_1$ and the beam $B_2$ are calculated by means of the difference between $B_{1P}$ and $B_{2P}$, and $B_{1S}$ and $B_{2S}$, which are the signals detected by photodiode detectors 6 and 7. A vector diagram for beams $B_1$ and $B_2$ at the time they pass through the beam splitter 5 is shown in Fig. 23. The vector XP in Fig. 23 is for the situation in which there is no phase shift in the angle of incidence.

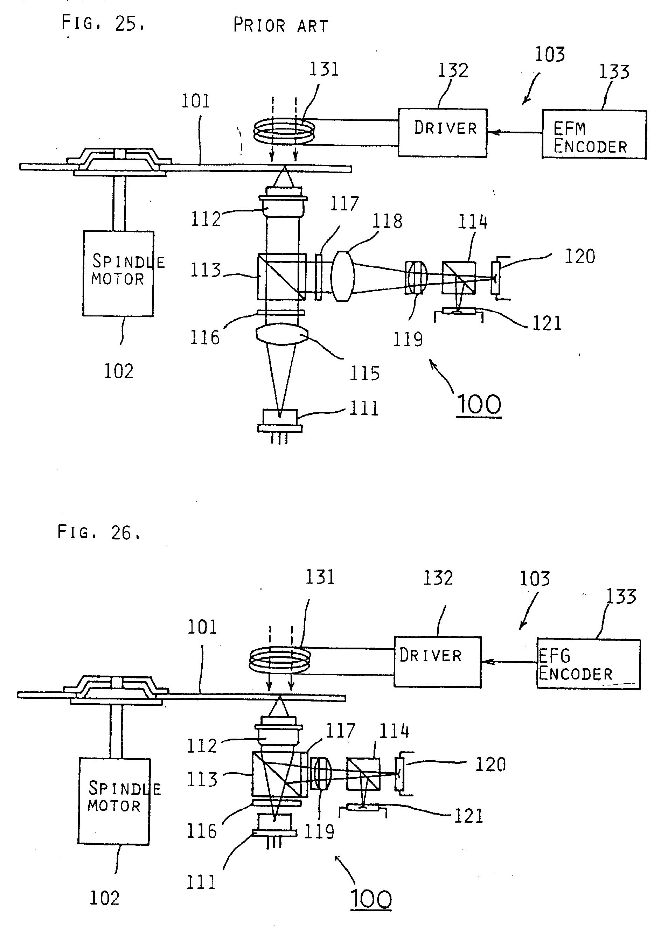

When a phase shift is generated between the P and S polarized light resulting from the disk's birefringence or retardation resulting from the optical elements, the light striking the polarized light beam splitter, which detects the data signal, will be elliptically polarized. The strength of the signal component will deteriorate, and the C/N ratio will decline. This situation is illustrated in Fig. 24.

In view of this situation, an object of this invention is to provide an improved beam splitter, and a device to record and reproduce optical data with such a beam splitter for which reflectivity, transmissivity and generated phase shifts are not dependent on the angle of incidence. Such a device will improve the C/N ratio, and the intensity distribution of the light beam condensed on the disk will be uniform. A further object is to provide optical components for that device.

We shall now further add detail background of this invention.

Recording and reproducing devices using a photomagnetic scheme are well known. Such a device known as magnetic/optical "MO" driver vertically magnetizes a disk composed of a magnetic material such as GdFe-Co or TbFeCo, records data on the disk, and allows reading of that data. The MO driver projects a laser beam onto the surface of the disk so that it receives an amount of energy greater than the Curie point. The data is recorded on the disk when magnetic energy corresponding to the orientation of magnetization of an external magnetic field is applied to the disk in a vertical direction. The data recorded on the disk is read by means of the Kerr effect, which causes the front of polarization of the laser beam to be slightly rotated in the direction in which the disk has been magnetized. The rotation of polarization can then be detected as the difference between the P and S polarized components of the light reflected by the disk.

Fig. 25 shows a block diagram illustrating the configuration of a conventional MO driver. This MO driver is one which employs a scheme to modulate the magnetic field. In this figure, disk 101 is rotated by spindle motor 102. Optical head 100 projects a laser beam onto the recording surface of disk 101 (the bottom surface in the figure). Magnetic head 103 generates an external magnetic field on the opposite side of disk 101 (the top side in the figure). Optical head 100 is moved by a carriage (not pictured) along the radius of disk 101. Optical head 100 is equipped with semiconductor Laser diode 111 ("LD"), which emits a laser beam, collimator lens 115, which renders virtually parallel the divergent rays emitted by laser diode 111, and grating element 116, which causes these rays to diverge into numerous diffracted beams. The beams which exit grating element 116 pass through beam splitter 113, are conducted to object lens 112, and are condensed on the surface of disk 101.

The grating 116 is needed only if the common three-beam method is used for the tracking servo scheme. If a single-beam method such as push-pull is used, grating element 116 can be dispensed with.

The light reflected by disk 101 is conducted through object lens 112 to beam splitter 113, where its optical path is bent. It then strikes $\lambda/2$ panel 117, and its front of polarization is rotated 45°. Once this reflected light has been condensed by condenser 118, it is given a point spreading aberration by cylindrical lens 119 and conducted to polarizing beam splitter ("PBS") 114. The polarizing beam splitter 114 passes one of the polarized components of the reflected light (e.g. the P polarized component), and reflects the S polarized component. It splits the beam into two components, and the split beams, each representing one polarized component, are conducted to photodetectors 120 and 121, respectively.

The data recorded on disk 101 is obtained by calculating the difference between the outputs of photodetectors 120 and 121. One of the photodetectors (photodetector 120 in this example) is partitioned in a suitable way so that error signals needed for the focus and tracking servos can be generated from the distribution, intensity, and other characteristics of the received beam.

The optical system in optical head 100 from collimator lens 115 through beam splitter 113 to object lens 112 is called the "condensing optical system." The optical system through which the light passes from the time it is reflected by beam splitter 113 until it strikes photodetectors 120 and 121 is called the "receptive optical system."

Magnetic head 103 has a coil 131 to generate an external magnetic field and a driver 132 to induce the current which flows in coil 131. Driver 132 controls the polarity of the current supplied to coil 131 based on modulating signals derived from encoder 133.

In the MO driver described above, beam splitter 113 is placed on a parallel portion of the optical path. To reduce the size of the optical head, it would be desirable to eliminate the collimator lens 115 and condenser lens 118 as shown in Fig. 25 to the arrangement shown in Fig. 26, and to place beam splitter 113 on a divergent or convergent portion of the optical path. The conventional beam splitter 113 has a conductive multilayer film 153 between the opposed faces of wafers 151 and 152, which are a pair of triangular prisms, as shown in Figs. 25 and 26. This conductive film 153 consists of alternate layers of conductive films 153a and 153b, which consist of two different materials. It is held in place by adhesive layer 154.

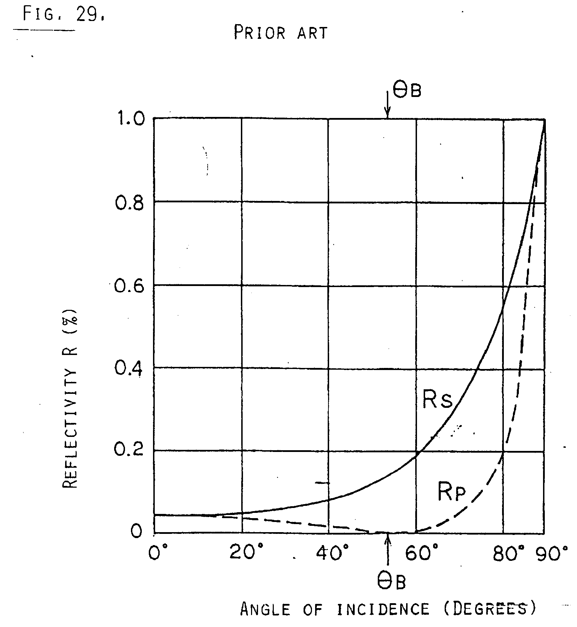

In the conventional beam splitter 113 of the configuration described above, the reflectivity characteristics of the borders between films are all identical, and the layers are stacked in consideration of the crossover effect of a single type of reflectivity characteristic. If we look at the reflectivity characteristic of the P polarized light, shown as the broken line $R_P$ in Fig. 29, the angle of incidence e at which the rerlectivity R becomes zero is the Brewster angle $\Theta_B$.

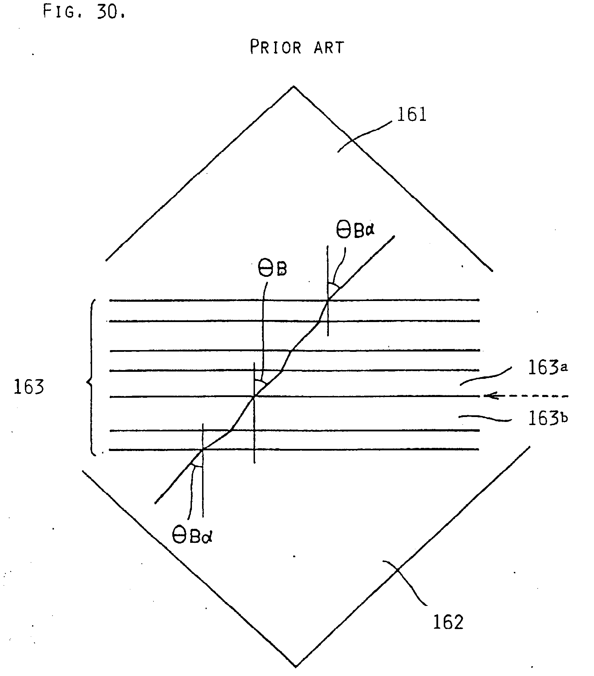

As can be seen in Fig. 30, the Brewster angle $\Theta_B$ is achieved when multilayer film 163 is sandwiched between wafers 161 and 162, which have a refractive index of $n_s$. Film 163 is composed of alternate layers of films 163a and 163b, which have refractive indices $n_x$ and $n_y$, respectively. The angle $\Theta_B$ formed by the path of the light traversing film 163a with respect to the normal path of the light is a Brewster angle in film 163a with respect to film 163b. The angle of incidence $\Theta_{B\alpha}$ at which the light strikes multilayer film 163 after passing through wafer 161 has a corrected value equal to Brewster angle $\Theta_B$ (i.e. the angle of incidence with respect to the wafer is a corrected Brewster angle).

When the Brewster angle $\Theta_B$ falls within the desired range of the angle of incidence, the reflectivity of the P polarized light will be zero at Brewster angle $\Theta_B$ no matter how many layers are stacked. For this reason, it will not be possible to achieve consistently the desired reflectivity $R_P$ for the polarized light everywhere within the range of the angle of incidence. If the Brewster angle $\Theta_B$ is outside the range of the angle of incidence, there is likely to be a dependency between the reflectivity at one of the borders and the angle of incidence of the P and S components because of the phase difference between the P and S polarized light. This makes it difficult to achieve a relatively constant reflectivity over a wide range of incident angles with just a few layers. The solid line $R_S$ in Fig. 29 shows the reflectivity characteristic of the S polarized light.

This invention was devised in view of the aforementioned problem. Its objective was to provide a beam splitter which did not suffer from a significant dependency between reflectivity and phase-shifted angles of incidence, and to provide a device to record and reproduce optical data which contained this beam splitter.

Summary Of This Invention

An object of the present invention is to provide an improved optical device.

An advantage of the present invention it to provide an improved optical device made to eliminate the dependency of angle of incident of light directed to the optical device.

Another advantage of the present invention is to provide an improved optical device comprising an optical substrate with multiple layers of optical film each made of one of at least three different types of optical materials disposed on at least one surface of the optical substrate.

Another object of the present invention is to provide an improved beam splitter.

A further object of the present invention is to provide an optical instrument to record and reproduce optical data on an optical recording medium.

To achieve the objects outlined above, the invention is devised as follows. A beam splitter is provided with wafers, between which is formed multiple layers of optical film, preferably dielectric films. The multiple layers of optical film are each made of one of at least three different materials.

An optical device according to the present invention contains at least three types of materials which have the relationship:

$$\phi_o + 3° \leqq \phi B_1$$
$$\phi_o - 10° \leqq \phi B_2 \leqq \phi_o$$
$$RO_1 \geqq 0.5\%$$
$$RO_2 \geqq 0.5\%,$$

where

- $\phi_o$ is the central value within the range of the incident angle of the light striking the multiple layers of optical film;
- $\Theta B_1$ is the corrected Brewster angle relative to the substrate which occurs at a border between two layers of optical film that are adjacent to each other;
- $\Theta B_2$ is the corrected Brewster angle relative to the substrate which occurs at a border between layers consisting of another two types of optical film that are adjacent to each other;
- $n_s$ is the refractive index of the substrate; $R\,0_1$ is the reflectivity of the first border at incident angle 0;
- $RO_2$ is the reflectivity of the second border at incident angle O;
- $\phi_o = 45° + \arcsin \{ (1/n_s) \sin (\Theta - 45°) \}$;
- $\phi B_1 = 45° + \arcsin \{ (1/n_s) \sin (\Theta B_1 - 45°) \}$; and
- $\phi B_2 = 45° + \arcsin \{ (1/n_s) \sin (\Theta B_2 - 45°) \}$.

The values $\phi B_1$ and $\phi B_2$ preferably fulfill the condition that $| \phi B_1 - \phi B_2 | \geqq 5°$, and by the fact that the aforesaid multiple layers of optical film comprise at least six layers.

The values $\phi_o$, $\phi B_1$ and $\phi B_2$ preferably fulfill the condition that

$$\phi_o - \phi B_2 < \phi B_1 - \phi_o$$

The optical device includes multiple optical film layers each made of at least three different types of materials a, b and c. A type A border is defined between optical film layers made of materials a and b, and a type B border is defined between optical film layers made of materials a and c. Preferably, the number of type A borders exceeds the number of type B borders.

Further, preferably there exists no borders between optical film layers made of materials b and c. However, in some applications there may exist one border between materials b and c.

The multiple layers of optical film are preferably arranged in the sequence a, b, a, b, a, c, a, b.

In another embodiment, the multiple layers of optical film each made of the layers of material a, b and c contain multiple layers, and in at least one type of material layer among these layers, at least one of the layers is replaced by a material other than a, b, or c.

Further, the replaced layer preferably has a higher refractive index than any of the layers a, b or c.

In addition, the replace material layer preferably has a its main component Hf oxide.

In a further embodiment, a beam splitter is constructed with multiple layers of optical film disposed with a set of prisms, however, a layer of adhesive is used to bind the prisms. The adhesive layer normally causes some reflectance at the interface between the adhesive layer and surface on one of the prisms. To eliminate this effect, a nonreflective layer is provided at the interface that prevents such reflectance (i.e. a layer is provided on the inside surface of the prism being adhered to the prism carrying the multiple layer of optical films).

An optical device according to the present invention is preferably made with an optical substrate having a refractive index $n_s$ of at least 1.6.

The three different types of materials a, b and c preferably contain as a main component Ti oxide, Al oxide, Mg fluoride, Hf oxide, or Si oxide.

Alternatively, the main components are Ti oxide, Al oxide or Mg fluoride.

As a further alternative, the main components are Ti oxide, Al oxide or Si oxide.

An optical device according to the present invention is made of three types of materials which fulfill the conditions that

$$\phi_o + 3° \leqq \phi B_1$$
$$\phi_o \leqq \phi B_2 \leqq \phi_o + 25°$$
$$RO_1 \geqq 0.8\%$$
$$RO_2 \geqq 0.8\%$$
$$\phi B_1 \geqq \phi B_2$$

where

- $\phi_o$ is the central value within the range of the incident angle of the light striking the multiple layers of optical film;
- $\Theta B_1$ is the corrected Brewster angle relative to the substrate which occurs at a border between two layers of optical film that are adjacent to each other;
- $\Theta B_2$ is the corrected Brewster angle relative to the substrate which occurs at a border between layers consisting of another two types of optical film that are adjacent to each other;
- $n_s$ is the refractive index of the substrate; $R O_1$ is the reflectivity of the first border at incident angle O;
- $RO_2$ is the reflectivity of the second border at incident angle O;
- $\phi_o = 45° + arcsin \{ (1/n_s) \sin (\Theta_o - 45°) \}$;
- $\phi B_1 = 45° + arcsin \{ (1/n_s) \sin (\Theta B_1 - 45°) \}$; and
- $\phi B_2 = 45° + arcsin \{ (1/n_s) \sin (\Theta B_2 - 45°) \}$.

The values $RO_1$ and $RO_2$ preferably fulfill the condition that
$$| RO_1 - RO_2 | > 2.5\%$$

The present invention is also directed to a device to record and reproduce optical data. The device includes a luminous element which projects a light beam onto an optical recording medium; a beam splitter according to the present invention, which is placed in a portion of the optical path where light rays are either diverging or converging and which splits the light reflected by the aforesaid optical recording medium; and a photodetector which receives the light which has either passed through or been reflected by the aforesaid beam splitter.

With a beam splitter according to the present invention, a multilayer film can be formed on the opposing surfaces of wafers o as to have two or more Brewster angles $\Theta_B$. This is done by using at least three materials having different refractive indices, and by appropriately arranging these materials. Then no matter how many layers are stacked in multilayer film 53, the reflectivity of the P polarized light never goes to zero, and the reflectivity and phase shift characteristics remain stable over a wide range of angles of incidence.

A device to record and reproduce optical data according to the present invention includes optical components with two beam splitters on the optical path along which a luminous element projects a beam of light onto recording disk. A portion of the light reflected by the disk passes through beam splitter, while the remainder is reflected by them. The split beams are received by the photodiode detectors.

The beam splitter is provided with polarizing films. At the time the beam is split, the variances of the reflectivity, transmissivity and generated phase shift, as dependent on the angles of incidence at which light strikes the beam splitter are minimized. As a result, the offset in the quantity of light received by photodiode detectors is reduced; the C/N ratio is improved; and the intensity distribution of the light beam condensed on the recording disk is made uniform.

## Brief Description Of the Drawing

Figure 1.

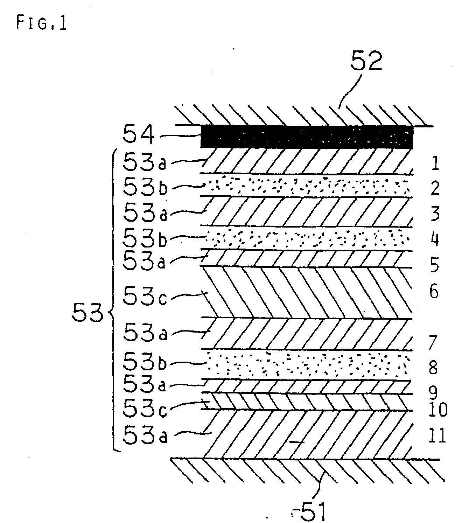

Figure 1 is a vertical cross section of our first embodiment of a beam splitter according to this invention.

Figure 2.

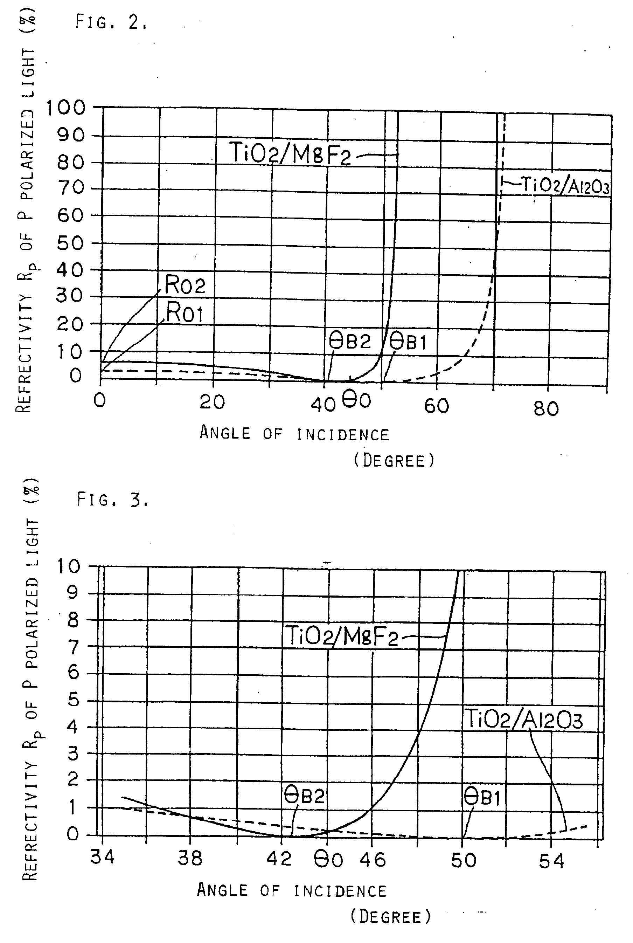

Figure 2 is a graph showing the reflectivity characteristics between adjacent films in Figure 1.

Figure 3.

Figure 3 is an enlarged view of the crucial part of Figure 2.

Figure 4.

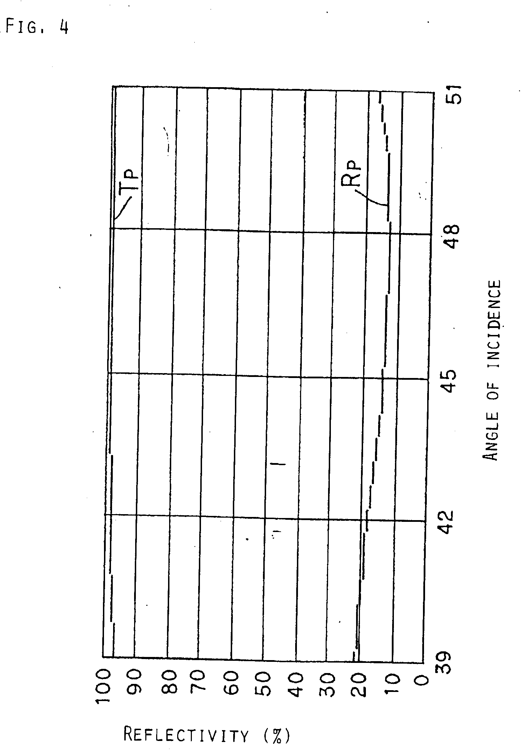

Figure 4 is a graph showing the reflectivity characteristics of the first embodiment of a beam splitter according to this invention.

Figure 5.

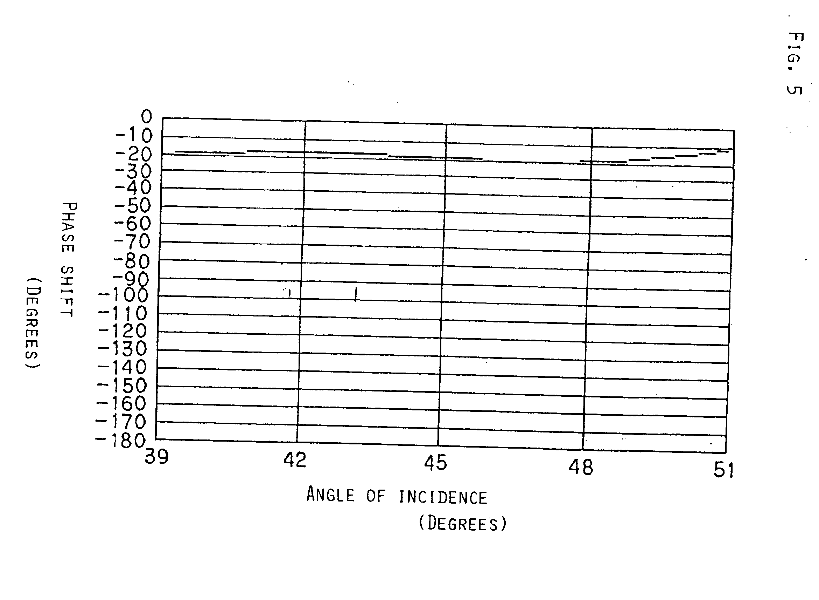

Figure 5 is a graph showing the phase shift characteristics of the first embodiment of a beam splitter according to this invention.

Figure 6.

Figure 6 is a vertical cross section of our second embodiment of a beam splitter according to this invention.

Figure 7.

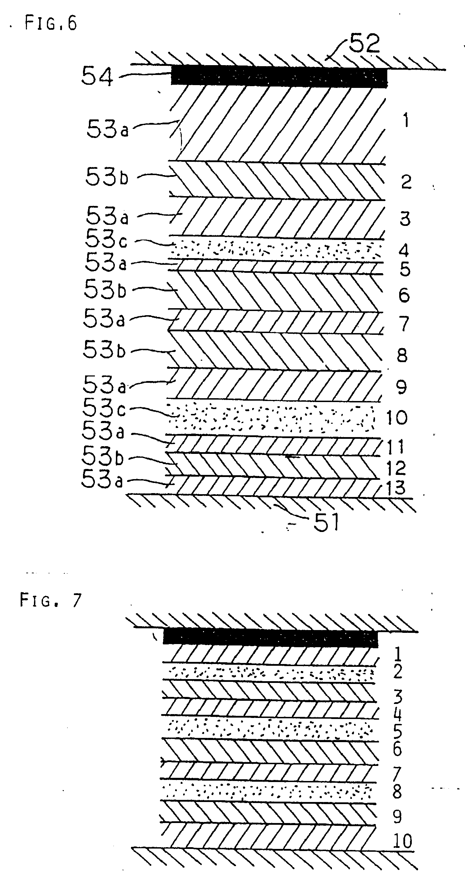

Figure 7 is a vertical cross section of our third embodiment of a beam splitter according to this invention.

Figure 8.

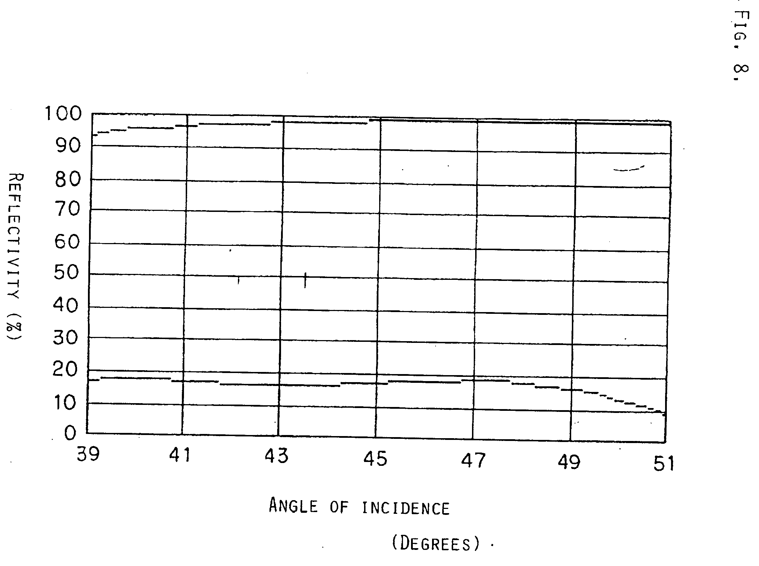

Figure 8 is a graph showing the reflectivity characteristics of the beam splitter pictured in Figure 7.

Figure 9.

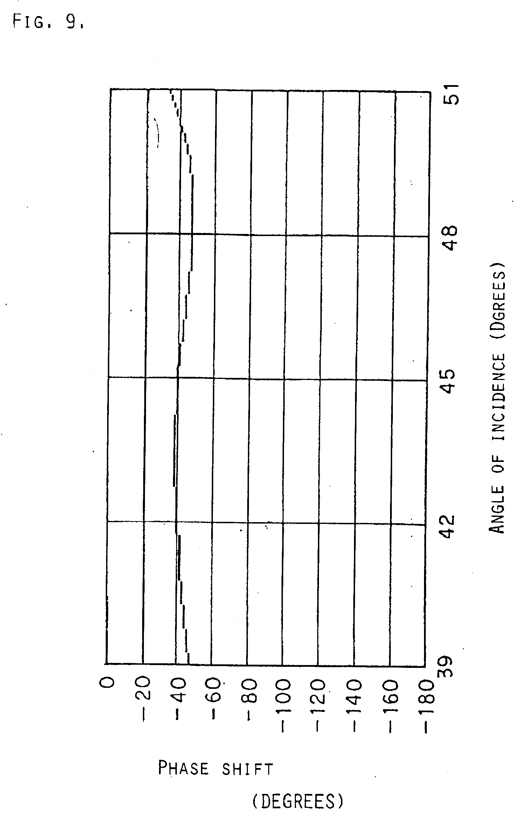

Figure 9 is a graph showing the phase shift characteristics of the beam splitter pictured in Figure 7.

Figure 10.

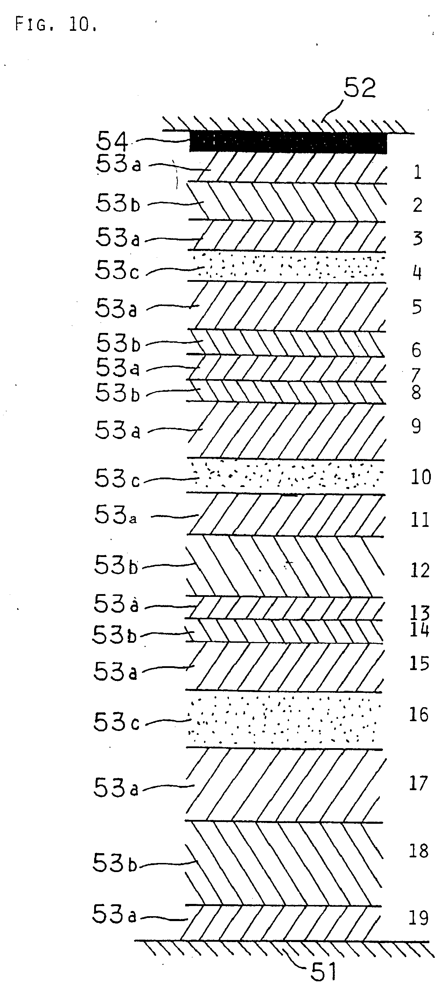

Figure 10 is a vertical cross section of our fourth embodiment of a beam splitter according to this invention.

Figure 11.

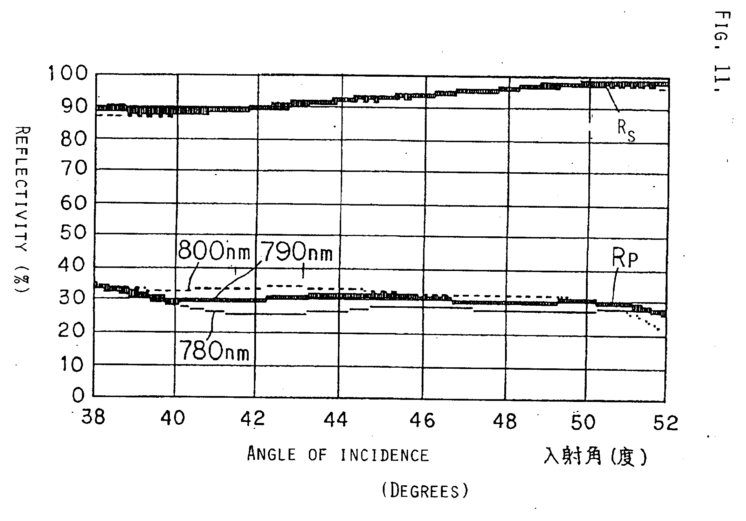

Figure 11 is a graph showing the reflectivity characteristics of the beam splitter pictured in Figure 10.

Figure 12.

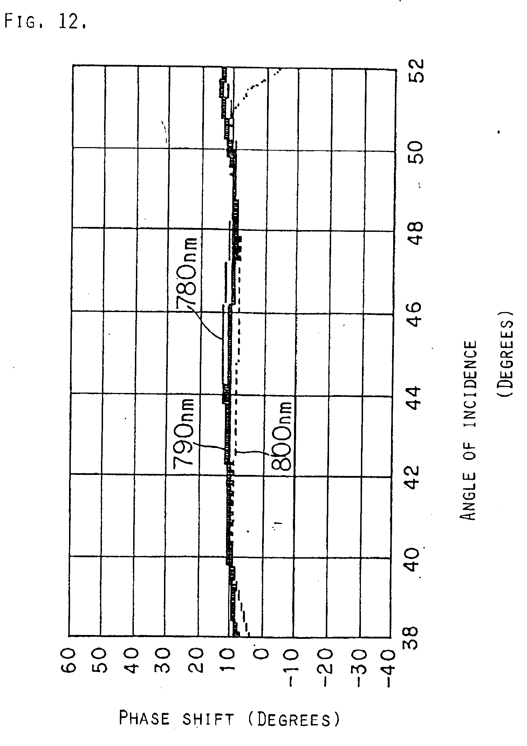

Figure 12 is a graph showing the phase shift characteristics of the beam splitter pictured in Figure 10.

Figure 13.

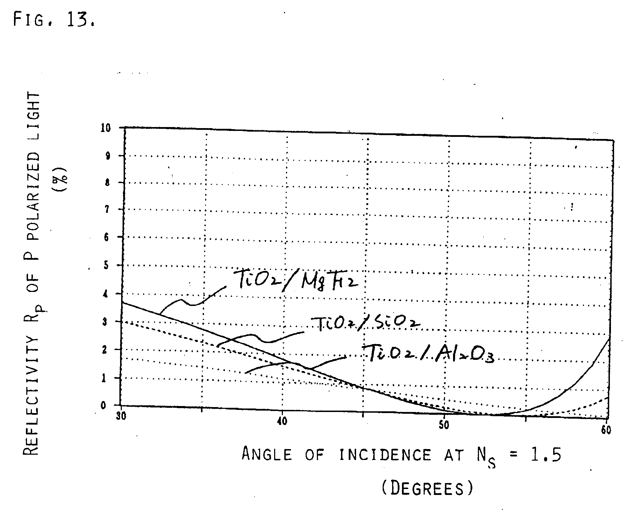

Figure 13 is a graph showing the reflectivity characteristics between adjacent films when brewster angles do not lie on either side of the midrange angle of incidence value.

Figure 14.

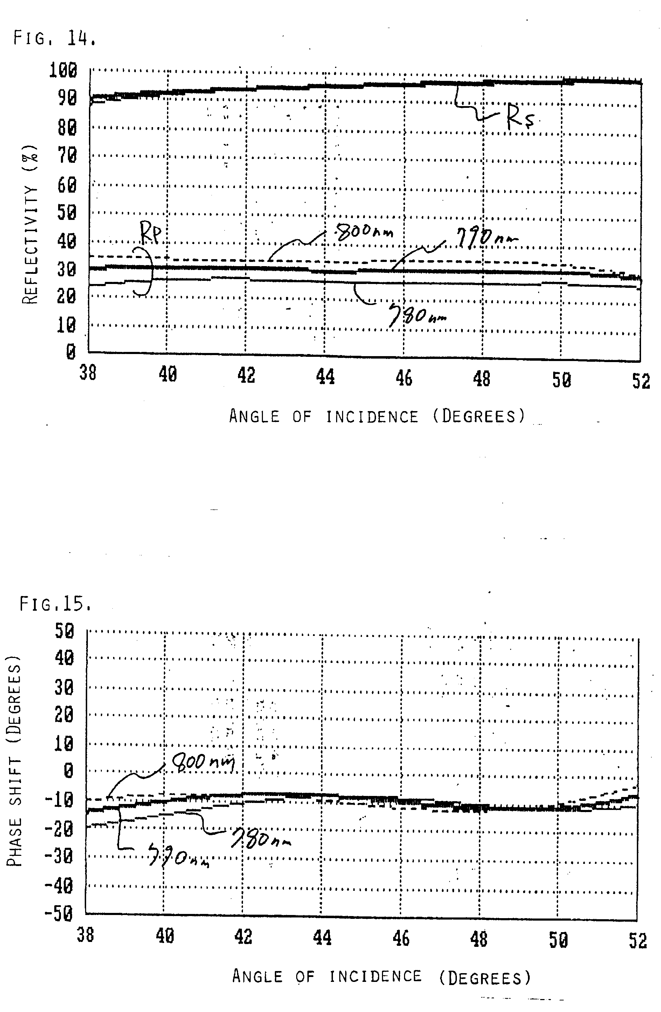

Figure 14 is a graph showing the reflectivity characteristics of the beam splitter according to our fifth embodiment.

Figure 15.

Figure 15 is a graph showing the phase shift characteristics of the beam splitter pictured according to our fifth embodiment.

Figure 16.

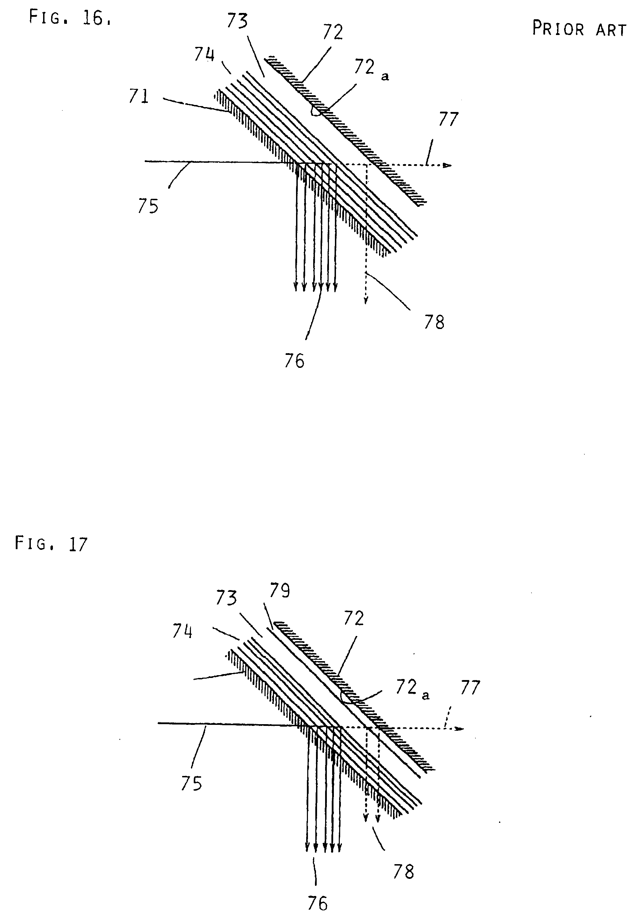

Figure 16 is a prior art showing the reflectivity characteristics of inner layer.

Figure 17.

Figure 17 is a sixth embodiment showing the reflectivity characteristics of inner layer.

Figure 18.

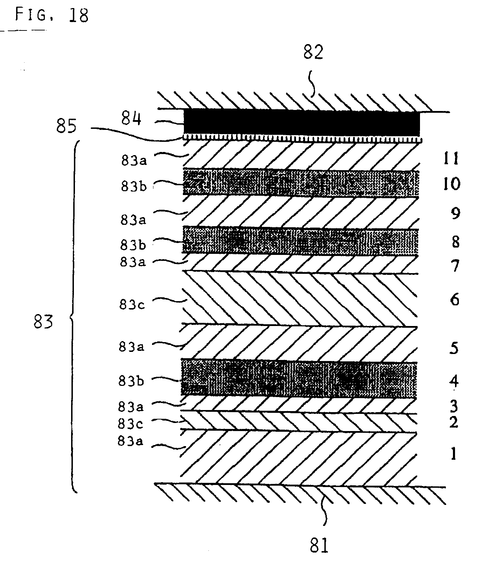

Figure 18 is a vertical cross section of our seventh embodiment of a beam splitter according to this invention.

Figure 19.

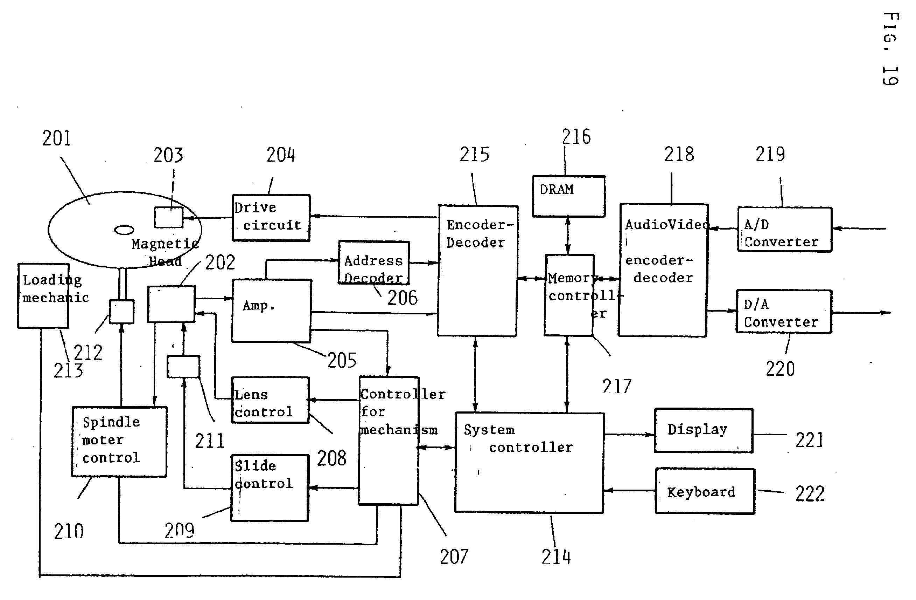

Figure 19 is a block diagram of a sample MO driver according to this invention.

Figure 20.

Figure 20 is a diagram illustrating the configuration of a sample of an existing beam splitter.

Figure 21.

Figure 21 is a graph showing the relationship between the angle of incidence of the light striking the BS and the tramsmissivity in the BS.

Figure 22.

Figure 22 is a graph showing the relationship between the angle of incidence of the light striking the BS and the generated phase shift in the BS.

Figure 23.

Figure 23 shows the vectors of the light passing through the second BS.

Figure 24.

Figure 24 shows how the vectors shown in Figure 23 are affected when a phase shift is generated between the beams.

Figure 25.

Figure 25 is a block diagram of a sample of an existing MO driver.

Figure 26.

Figure 26 is a block diagram of a sample MO driver according to this invention.

Figure 27.

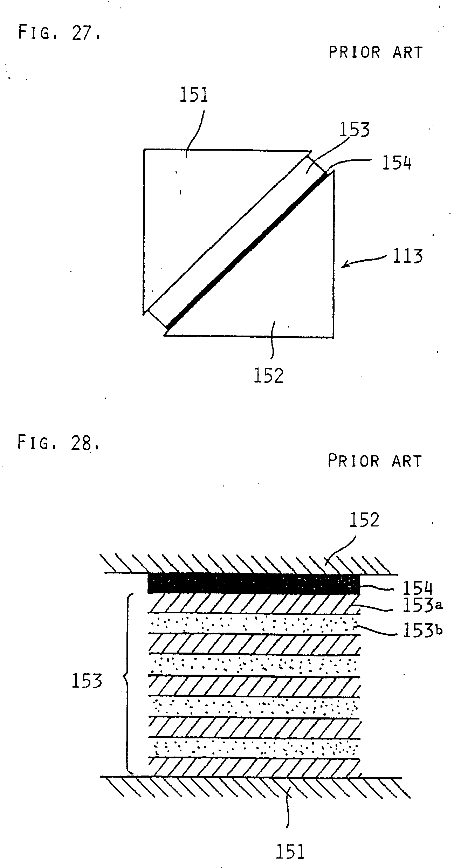

Figure 27 is a diagram illustrating the configuration of a sample of an existing beam splitter.

Figure 28.

Figure 28 is a vertical cross section of the conductive multilayer film in Figure 27.

EP 0 601 862 A1

Figure 29.
Figure 29 is a graph showing the dependency of the reflectivity of an existing beam splitter on angle of incidence.
Figure 30.
Figure 30 illustrates Brewster angles.

## Detail Description Of The Invention

In this section we shall explain a preferred embodiment of the beam splitter of this invention with reference to the drawings.

In the embodiment shown in Fig. 1, a conductive multilayer film 53 is formed on the surface of the wafers 51 and 52. The conductive multilayer film 53 comprises at least three (3) materials having different refractive indices. These materials are selected so that $\phi B_1$ and $\phi B_2$ fulfill the following conditions.

$$\phi B_1 \geqq \phi_o + 3°$$
$$\phi_o - 10° \leqq \phi B_2 \leqq \phi_o + 25°$$
$$\phi B_1 \geqq \phi B_2$$

If $\phi B_1 \leqq \phi_o$, then $\phi B_1 - \phi_o \geqq \phi_o - \phi B_2$

If $\phi B_1 \leqq \phi_o + 10°$, then $\phi B_1 - \phi B_2 \geqq 5°$

Where

$$\phi_o = 45° + \arcsin \{ (1/n_s) \sin (\Theta O - 45°) \}$$
$$\phi B_1 = 45° + \arcsin \{ (1/n_s) \sin (\Theta B_1 - 45°) \}$$
$$\phi B_2 = 45° + \arcsin \{ (1/n_s) \sin (\Theta B_2 - 45°) \}$$

- $\Theta_o$ is the central value in the range of incident angles (the angle of incidence of the light striking the conductive multilayer film;
- $\Theta B_1$ and $\Theta B_2$ are the Brewster angles occurring at the borders between two conductive films having different refractive indices $n_x$ and $n_y$, which will be expressed by the formula given below (the angles of incidence of the light striking the conductive multilayer film);
- $\Theta B = \arcsin \{ (n_x/n_s) \sin (\arctan (n_y/n_x) ) \}$
- $n_s$ is the refractive index of the wafers.

The reflectivities $R_{o1}$ and $R_{o2}$ which obtain at an incident angle of 0° on the border between films having the Brewster angles $\Theta B_1$ and $\Theta B_2$ as stated above fulfill the following conditions.

$$R_{o1} \geqq 0.8\%$$
$$R_{o2} \geqq 0.5\% \ (\phi B_2 < \phi_o + 5°)$$
$$R_{o2} \geqq 0.8\% \ (\phi_{B2} \geqq \phi_o + 5°)$$

If $\phi B_1 - \phi B_2 < 5°$, then $| R_{o1} - R_{o2} | \geqq 1\%$

If $\phi B_2 \leqq \phi_o$, then there are more borders with Brewster angle $\Theta B_1$ (hereafter, type A borders) than with Brewster angle $\Theta B_2$ (hereafter, B borders).

When the film is composed of three (3) materials a, b and c, if type A borders are those between materials a and b, and B borders are those between materials a and c, then the A and B borders will be more numerous than those between materials b and c.

When the film is composed of four (4) or more materials, if type A borders are those between materials a and b, and B borders are those between materials c and d, then the A and B borders will be more numerous than the other borders.

The thickness of each film can be selected as needed.

The relationship between reflectivity and angle of incidence at the border between two conductive films has the characteristic shown in Fig. 2. In this figure, the adjacent conductive films are $TiO_2$ - $Al_2O_3$ (A border) and $TiO_2$ - $MgF_2$ (B border). The Brewster angle of the former is $\Theta B_1$ and that of the latter $\Theta B_2$. Fig. 3 is an enlargement of the crucial part of Fig. 2.

As shown in Figs. 2 and 3, the reflectivity $R_P$ of the P polarized light goes to 0 at either Brewster angle; at angles smaller than this Brewster angle it decreases monotonically, and at angles larger than this Brewster angle it increases monotonically. The reflectivity of the P polarized light has a small slope with respect to the changing angle in the monotonically decreasing portion where the angle is smaller than either Brewster angle; it has a large slope in the monotonically increasing portion where the angle is larger than this Brewster angle. At angles smaller than a given Brewster angle, the difference between the reflectivity of the P and S polarized light is slight.

With a beam splitter configured as described above, the following effects can be obtained.

(1) When at least three (3) materials are used for the film, there will necessarily be at least two Brewster angles, so no matter how many layers are stacked, the reflectivity of the P polarized light will never go to

7

0.

(2) When $\phi B_2 \leqq \phi_o$:

(2-1) The two Brewster angles $\Theta B_1$ and $\Theta B_2$ lie on either side of the central value $\Theta_o$ in the range of incident angles. Thus within the range of incident angles, the portion of the range in which there is a monotonic decrease of reflectivity of the A border is also the portion where there is a monotonic increase of reflectivity at the B border, as shown in Fig. 3, so that stable characteristics can be obtained over a wide range of angles of incidence.

(2-2) Within the range of angles of incidence in use, the reflectivity of the P polarized light at type A borders is lower than at B borders. Thus by creating more type A borders than B borders we can achieve stable characteristics with relatively few layers.

(2-3) With the condition that $\phi_o - \phi B_2 < \phi B_1 - \phi_o$, that is to say, that $\Theta_o - \Theta B_2 < \Theta B_1 - \Theta_o$, the reflectivity for the P polarized light at type A borders is increased, and stable characteristics can be obtained with relatively few layers.

(2-4) When the difference between $\phi B_1$ and $\phi B_2$ ($\Theta B_1$ and $\Theta B_2$) is not very great, the reflectivity for the P polarized light does not increase in the vicinity of $\Theta B_1$ and $\Theta B_2$. Accordingly, to achieve a reflectivity of 15 to 30% for the P polarized light in a conductive multilayer film with 10 to 20 layers, it is necessary that the difference between $\phi B_1$ and $\phi B_2$ be greater than 5°.

(2-5) To achieve a reflectivity of 15 to 30% for the P polarized light in a conductive multilayer film with 10 to 20 layers, a certain level of reflectivity $R_P$ for the P polarized light will need to be maintained over the range of incident angles. The reflectivity $R_P$ within that range will be lower than the reflectivity $R_o$ at incident angle O. However, under the conditions that $R_{o1} \geqq 0.8\%$, $R_{o2} \geqq 0.5\%$ ($\phi B_2 < \phi 0 + 5°$), and $R_{o2} \geqq 0.8\%$ ($\phi B_2 \geqq \phi 0 + 5°$), the characteristics stated above can easily be obtained.

(3) When $\phi B_2 \geqq \phi_o$:

(3-1) If the two Brewster angles $\Theta B_1$ and $\Theta B_2$ are both too large, the difference between the reflectivity of the P and S polarized light in the range of incident angles will disappear, and they will no longer be distinguishable. Accordingly, to achieve a reflectivity of 15 to 30% for the P polarized light and more than 90% for the S polarized light, the angles will have to be relatively small. The characteristics stated above can be achieved under the condition that $\phi B_2 \leqq \phi_o + 25°$.

(3-2) If the difference between $R_{o1}$ and $R_{o2}$ is at least 1% when the difference between $\phi_{B1}$ and $\phi_{B2}$ is slight (less than 5°), the difference between the slopes of the dependency of reflectivity on incident angle at two borders will be relatively small. Thus stable characteristics can be achieved over a wide range with just a few layers.

(3-3) For the common type of beam splitter, it holds true that $\phi_o = \Theta_o = 45°$. For such a beam splitter, it is necessary to use an expensive wafer, for example an SF-11, with a refractive index of at least 1.6, as the two conductive materials with borders which fulfill the condition that $\phi_{B2} < \phi_o$. This is because the material used must have a refractive index of 1.35 to 2.3. However, if the condition is that $\phi_{B2} \geqq \phi_0$, a less expensive wafer such as a BK-7, with a refractive index of 1.5, can be used.

(4) When the materials for the film are chosen and the film designed-using the conditions stated above, it is simple to evaluate whether or not the configuration designed is suitable or whether or not the desired characteristics can be achieved with that design. This improves the efficiency of the design process and offers a promising method of developing materials.

(5) Generally speaking, perhaps the simplest configuration for a film is a periodic configuration. Using three materials a, b and c, there exists borders between a and b ("type A borders") and those between a and c ("type B borders"). If a repeated order of a, b, c layer of film are used, then the film will contain just as many b-c borders as A and B type borders. The number of layers will accordingly need to be quite large. By choosing a design which does not result in a large number of periodically recurring A and B borders, stable characteristics can be achieved with relatively few layers.

(6) If it is desired to stabilize both the reflectivity and the phase shift between the P and S polarized components of the light over a wide range of incident angles while using a periodic configuration, the design options are limited, and it is necessary to use a large number of layers. In addition, it is generally true that the more layers are used, the more difficult the film will be to make. If the thickness of the films is selected as needed, the designer will have greater freedom even if a periodic configuration is used, and the number of layers can be minimized.

**Table 1.**

Fig. 1 and Table 1 illustrate the configuration of the first embodiment. In this embodiment, the design wavelength is 790nm. Multilayer film 53, in which are stacked three materials consisting of $TiO_2$ (53a), $Al_2O_3$ (53b)

and $MgF_2$ (53c), is sandwiched between wafers 51 and 52, which have a refractive index of 1.76. Film 53 is fixed to the wafer by means of adhesive layer 54. Film 53 has a total of eleven layers, all of which are of different thicknesses. There are six type A borders, i.e., borders between films 53a and 53b; and there are four type B borders, i.e., those between films 53a and 53c. As shown in Figure 3, the corrected Brewster angle $\Theta_{B1}$ relative to the wafer at type A borders measures 50.2°, while the corrected Brewster angle $\Theta_{B2}$ relative to the wafer at type B borders measures 42.5°. The two corrected Brewster angles relative to the wafer, $\Theta_{B1}$, and $\Theta_{B2}$, fall on either side of the central value $\Theta_O$ (45°) in the range of incident angles.

The dependency of the reflectivity $R_P$ of the P polarized light on the angle of incidence at each A and B border goes to 0 at the corrected Brewster angles $\Theta_{B1}$, and $\Theta_{B2}$ with respect to the wafer, as shown in Fig. 3. At smaller angles of incidence it decreases monotonically, and at greater angles of incidence it increases monotonically. The slope of the curve in the monotonically increasing portion, where the incident angle is greater than corrected Brewster angle $\Theta_B$ relative to the wafer, is larger than that in the monotonically decreasing portion, where the incident angle is smaller than corrected Brewster angle $\Theta_B$ relative to the wafer.

By constructing the multilayer film from the three materials 53a, 53b and 53c, we are able to achieve two Brewster angles $\Theta_{B1}$ and $\Theta_{B2}$ as the corrected Brewster angle $\Theta_B$ with respect to the wafer. With two Brewster angles, the reflectivity $R_P$ of the P polarized light never goes to 0 because of the angle of incidence. Because the two Brewster angles $\Theta_{B1}$ and $\Theta_{B2}$ lie on either side of the central value $\Theta_0$ of the range of incident angles, the monotonically decreasing portion of the dependence of $R_P$ on incident angle for the type A borders and the monotonically increasing portion of this dependency for the type B borders cancel each other, and stable reflectivity characteristics can be achieved in the range of angles of incidence.

The monotonically decreasing segment of the characteristic curve for reflectivity at type A borders has a small slope, and the monotonically increasing segment of the characteristic curve for reflectivity at type B borders has a large slope. By creating more type A than type B borders, we can bring into balance the reflectivity for angles of incidence above and below the central value $\Theta_o$ using only a few layers. The two Brewster angles $\Theta_{B1}$ and $\Theta_{B2}$, corrected with respect to the wafer, are 50.2° and 42.5°, respectively. Angle $\Theta_{B1}$ is further from $\Theta_o$ than $\Theta_{B2}$. Since the reflectivity of the monotonically decreasing portion increases in the range of incident angles, the reflectivity can be balanced using relatively few layers.

In the above embodiment, a beam splitter with a conductive multilayer film 53 consisting of relatively few layers is able to maintain in a stable fashion, across a wide range of angles of incidence, reflectivity and phase shift characteristics. Fig. 4 and 5 show, respectively, the dependency of reflectivity and phase shift on angle of incidence. At an angle of incidence of 45° ± 5.7°, the reflectivity $R_P$ = 18% ± 5%; $R_S$ > 95%; and phase shift = 15° ± 5°.

### Table 2.

The configuration of our second embodiment is shown in Fig. 6 and Table 2. In this embodiment, the construction of conductive multilayer film 53 is based on two sequences of $TiO_2$, $Al_2O_3$, $TiO_2$, $MgF_2$, $TiO_2$, $Al_2O_3$. The dependency of reflectivity and phase shift on angle of incidence is the same as for the first embodiment, which is shown Figs. 4 and 5.

### Table 3.

A third embodiment of this invention is shown in Fig. 7 and Table 3. The structure of multilayer film 53 in this example is based on three sequences of $TiO_2$, $Al_2O_3$, $MgF_2$. If the thickness of each layer is selected optimally, it will be possible to realize a multilayer film with only a few layers. The dependency of reflectivity and phase shift on angle of incidence in this embodiment are shown in Figs. 8 and 9, respectively.

### Table 4.

Fig. 10 and Table 4 show the configuration of a fourth embodiment of this invention. The design wavelength of this embodiment is 790nm, and the refractive indices of the wafer is 1.5. Conductive film 53 is composed of three materials: $TiO_2$, $Al_2O_3$ and $MgF_2$. Type A borders are those between $TiO_2$ and $Al_2O_3$, and type B borders are those between $TiO_2$ and $MgF_2$. The corrected Brewster angles $\Theta_{B1}$ and $\Theta_{B2}$ relative to the wafer at the type A and B borders are 64.3° and 52.5° respectively. Brewster angles $\Theta_{B1}$ and $\Theta_{B2}$, are both greater than the midpoint value $\Theta_o$ (45%) of the range of incident angles. Figs. 11 and 12 show the dependency of reflectivity and phase shift on angle of incidence at wavelengths of 780, 720 and 800nm.

Details of the selection of material and number of borders in the above four (4) embodiments will now be described.

Generally, the film 53 is composed of two materials, one with a high refractive index and one with a low refractive index. Because there is a Brewster angle which falls within the range of incident angles used, there will be an angle where $R_P \simeq 0\%$ no matter how many layers are stacked, thus, there will be a dependency on angle of incidence.

With this invention, materials of intermediate refractive index are used. When $R_P \simeq 0\%$ at one type of border, $R_P$ not $\simeq 0\%$ at another type of border. Thus, dependency on angle of incidence is minimized.

To achieve a relatively high reflectivity $R_P$ with relatively few layers, the difference in refractive index between highly refractive and slightly refractive materials should be large.

If $TiO_2$ (N $\simeq$ 2.26) is chosen as the highly refractive material and $MgF_2$ (N $\simeq$ 1.39) as the slightly refractive material, the film will be easy to make and the difference between the refractive indices will be large.

$Al_2O_3$ has an intermediate refractivity between that of $TiO_2$ and $MgF_2$. $Al_2O_3$ is chosen so that the film will be easy to make. It would be possible use $ZrO_2$ or a mixture of $ZrO_2$ and other materials as the material with an intermediate refractive index. However, $ZrO_2$ is non-homogeneous, and therefore $Al_2O_3$ was selected.

Metallic substances can possibly be used for making the layers, however, there is a problem with absorption of light. Thus, dielectric materials are preferably selected.

As can be seen in Fig. 3, when $\Theta_{B1}$ and $\Theta_{B2}$ lie on either side of the midrange value $\Theta_o$, for angle of incidence, $R_P$ increases sharply as the angle of incidence at the border between $TiO_2$ and $MgF_2$ becomes larger than $\Theta_{B2}$. It follows, then, that if borders between $TiO_2$ and $MgF_2$ are numerous, there will necessarily be a strong dependence on the angle of incidence.

By making $TiO_2/Al_2O_3$ borders more numerous than $TiO_2/MgF_2$ borders, there is a reduced dependence on angle of incidence.

As can be seen in Fig. 13, even if $\Theta_{B1}$ and $\Theta_{B2}$ do not lie on either side of the midrange angle of incidence value $\Theta_o$, the dependency of $R_P$ on angle of incidence at the $TiO_2/Al_2O_3$ borders is less than the dependency of $R_P$ on angle of incidence at the $TiO_2/MgF_2$ borders. Thus, it is advantageous to have $TiO_2/Al_2O_3$ borders more numerous than the $TiO_2/MgF_2$ borders.

It would be possible to use $Al_2O_3/MgF_2$ borders, but the reflectivity ($R_P$) would be lower than that of $TiO_2/MgF_2$ borders. To achieve the $R_P$ discussed above, the increased number of $TiO_2/MgF_2$ borders keeps of numbers of layers down. This occurs since the greater the difference between refractive indices, the greater the $R_P$ at a border.

Achieving the $R_P$s discussed above (e.g. 15% and 30%) is difficult, unless six (6) or more layers are utilized.


EXAMPLES


EXAMPLE #1


The layers are identified as follows:
a = $TiO_2$, b = $Al_2O_3$, c = $MgF_2$.    Sample #1 (See Table 1): (starting with the top layer) a, c, a, b, a, c, a, b, a, b, a

Sample #2 (See Table 2): (starting with the tip layer) a, b, a, c, a, b, a, b, a, c, a, b, a

Sample #3 (See Table 3): (starting with the top layer) a, b, c, a, b, c, a, b, c, a

Sample #4 (See Table 4): (starting with the top layer) a, b, a, c, a, b, a, b, a, c, a, b, a, b, a, c, a, b, a

With the exception of Element 3, all of the above contain at least one set of a, b, a, b, a, c, a, b. Using stacks of a, b, a, b, a, c, a, b will simplify the design.

As a basic combination of the sequence of layering a, b, a, b , a, c, a, b, the following combination can be formed:

layers numbers 1 2 3 4 5 6 7 8 9 10 11 12 13 14 15 16 17 18 19 representing the sequence a, c, a, b, a, b, a, c, a, b, a, b, a, c, a, b, a, b, a

With this structure, just as with the samples described above, varying the thickness of the layers optimally will result in a beam splitter without a significant dependency of reflectivity on angle of incidence. This design will be referred to as Configuration A.

There are no $Al_2O_3/MgF_2$ borders(i.e., borders between b and c) in Configuration A. A b-c border can be provided, for example, by removing the 15th layer (a layer) so that the c layer in the 14th place would adjoin the b layer in the 16th place. With this configuration, identical characteristics can be achieved by optimizing the thickness of each layer. By creating a single $Al_2O_3/MgF_2$ border, a beam splitter without significant dependence on angle of incidence can be achieve, but which uses relatively few layers.

With Configuration A, identical characteristics can be attained even if one layer is replaced by a different material.

For example, the layer adjacent to the adhesive 54, which is TiO$_2$, can be replaced with a material like HfO$_2$ (N = 2.07), which has good resistance to adhesive.

Not only the first layer, but any other layer too, can be replaced with a material other than a, b or c.

Table 5.

Fig. Table 5 show the configuration of a fifth embodiment of this invention. The configuration given in Table 5 (for which the refractive index N$_S$ of the wafer is 1.5) is based on Configuration A. In this embodiment, the layer adjacent to the adhesive has been changed from TiO$_2$ to HfO$_2$, and all the c layers have been changed from MgF$_2$ to SiO$_2$ (N $\simeq$ 1.46). In other words, four different materials are used: HfO$_2$, TiO$_2$, Al$_2$O$_3$ and SiO$_2$. (The thickness of the optical film shown in the tables, including those for the embodiments of Tables 1-5, have been chosen based on a design wavelength of 790nm.)

The reflectivity characteristics for this fifth embodiment are shown in Fig. 14, and the phase shift characteristics in Fig. 15. This embodiment has characteristics which have no significant dependence on angle of incidence.

If the TiO$_2$ layer in the 15th slot is omitted, virtually identical characteristics can be obtained.

As was discussed above, the following materials can also be used in this embodiment.

1. MgO: Same refractive index as Al$_2$O$_3$
2. ZnS: Same refractive index as TiO$_2$
3. InO$_3$: Same Refractive index as HfO$_2$
4. ZnO: Same Refractive index as HfO$_2$
5. ZrO$_2$: Same refractive index as HfO$_2$
6. Ta$_2$O$_5$: Refractive index between TiO$_2$ and HfO$_2$
7. Mixture of ZrO$_2$ and TiO$_2$: between TiO$_2$ and HfO$_2$

The materials listed above have refractive indices which are very similar to the original choices. If they are substituted, an optimal design will yield identical results.

The invention will be equally effective if the materials listed above or mixtures of these materials are selected as the three materials. Identical results will be obtained.

The following materials can also for practical purposes be considered identical.

AlF$_3$, CeF$_3$, CeO$_2$, Gd$_2$O$_3$, LaF$_3$, LiF, NdF$_3$, Nd$_2$O$_3$, PbCl$_2$, PbF$_2$, PbO, SIO, Si$_2$O$_3$, and TiO.

This invention is applicable no matter what the value of the refractive index N$_S$ of the wafer. More specifically, the following results are obtained if N$_S$ $\simeq$ 1.5. Materials whose N$_S$ $\simeq$ 1.5, such as BK-7, are inexpensive and easy to deal with. They allow us to produce, at low cost, a beam splitter which has stable characteristics and is easy to manufacture.

With materials other than BK-7 (such as the SF family of materials), a phenomenon known as "scorching" occurs on the grinding surface. It is thus difficult to achieve stable characteristics. Handling is also difficult, which does not lend itself to mass production.

In the sixth embodiment as shown in Fig. 16, prisms 71 and 72 are held together by a layer of adhesive 73. Light 5 passing through prism 71 and multiple layers of optical film 74 is partially reflected as beams 76. Light is also undesireably reflected at the inner surface 72a (i.e. interface of adhesive layer 73 and prism 72) of prism 72 as beams 8, as shown in Fig. 16.

To eliminate this effect, a non-reflective layer 79 is applied to the inner surface 72a of prism 72 to eliminate reflected beams 8, as shown in Fig. 17.

In the seventh embodiment as shown in Fig. 18, the adhesive layer 84 can contain water and the prisms 81 and 82 can contain lead ("Pb") effecting the multiple layers of optical film 83. In order to prevent this effect, a layer 55 is provided to prevent penetration of water from the adhesive layer 84 and lead from the prism 82 to the multiple layers of optical film 83.

APPARATUS

Various embodiments of the optical heads discussed in detail above can be implemented into a variety of electronic devices. The following are examples of such implementation.

A sample configuration for the MO driver used in the optical head of a beam splitter employing a conductive multilayer film 53 of the type shown in the above examples is given in Fig. 19.

The block diagram of Fig. 19 provides an illustration of a device to process optical information according to the present invention. This device uses the optical head featured in every embodiment discussed above.

In this figure, A/D converter 219 digitizes the analog data which is to be recorded. D/A converter 220 converts digital signals to analog signals. Audio-video encoder-decoder 218 compresses or expands the digitized audio or video signal. Backup memory controller 217 stores the compressed digitized data temporarily in DRAM 216. Encoder-decoder 215 modulates or demodulates the signal using a specified modulation scheme. Circuit 204 drives magnetic head 203, which modulates the magnetic field in response to a modulated digital signal.

Spindle motor 212 drives the rotation of optical recording medium 201. Optical head 202 (of a type discussed in detail above) is the same optical head used in the embodiments of this invention discussed earlier. It optically reads the data off optical recording medium 201. Slide motor 211 moves optical head 202 along the radius of optical recording medium 201. Amp 205 amplifies the optical data reproduced off optical head 202. Address decoder 206 extracts addresses from the reproduced data. Mechanical controller 207 controls circuit 208, which controls the object lens (not pictured) in optical head 202; circuit 209, which controls stepping motor 211; circuit 210, which controls spindle motor 212; and loading mechanism 213, which loads optical recording medium 201.

Display 221 displays address data and other information. Keyboard 222 is the input device by which instructions are entered for recording and reproducing or mechanical operation. System controller 214 controls the overall operation of the device.

We shall now discuss the operation of the device based on the configuration we have given.

First, we shall explain how data is reproduced off optical recording medium 201. When the command for reproduction is entered via keyboard 222, system controller 214 transmits a reproduce command to mechanical controller 207. Controller 207 transmits signals to the various control circuits mentioned above. As optical recording medium 201 rotates, optical head 202 projects a beam of light onto it. A signal corresponding to the light reflected by recording medium 201 is input into amp 205. A signal output by amp 205 is sent to mechanical controller 207, where it is used as a servo signal to control the movement of optical head 202 and its object lens, or to control the rotation of optical recording medium 201.

Another signal output by amp 205 is sent to address decoder 206 and encoder-decoder 204 where address data are extracted and demodulated. The demodulated signal is stored temporarily in DRAM 216 by backup memory controller 217. The stored data are read out, the compressed audio and video signals are expanded by encoder-decoder 218, processed by D/A converter 219, and output as analog signals.

Next we shall explain how data are recorded on optical recording medium 201. When the command for recording is entered via keyboard 222, system controller 214 transmits a record command to mechanical controller 207. Controller 207 transmits signals to the various control circuits mentioned above. As optical recording medium 201 rotates, optical head 202 projects a beam of light onto it, causing the temperature of the spot illuminated by the beam to rise. Simultaneously, a signal corresponding to the light reflected by recording medium 201 is input into amp 205. A signal output by amp 205 is sent to mechanical controller 207, where it is used as a servo signal to control the movement of optical head 202 and its object lens, or to control the rotation of optical recording medium 201.

The data to be recorded are digitized by A/D converter 219, input into audio-video encoder-decoder 218, and compressed. The compressed signal is stored temporarily in DRAM 216 by backup memory controller 217. The data stored in DRAM 216 are read out, sent to encoder-decoder 204, and modulated. The modulated signal is sent to magnetic head 203 via drive circuit 204. When the magnetic field is modulated, data are recorded on optical recording medium 201.

Optical recording medium 201 is described above as a disk-type photomagnetic recording medium. However, it would be equally acceptable to use a card or tape-type medium, as long as the recording medium uses an optical recording scheme. Figure of

As was discussed above, in the device to record and reproduce optical data and the optical components of this invention, a beam splitter whose reflectivity, transmissivity and generated phase shift do not depend on angle of incidence of the light is placed on a non-parallel portion of the optical path. When non-parallel light is split by this type of beam splitter, the result is a reduction of phase shift and an enhancement of the C/N ratio. The offset in quantity of light received by the photodetector is reduced, and the intensity of the light beam condensed onto the optical recording medium is caused to have a uniform distribution. All of these effects make it easier to design a device to record and reproduce optical data with a limited optical system.

TABLE 1.

| LAYER | MATERIAL | THICKNESS OF FILM (λ/4) | |
|---|---|---|---|
| 1 | TiO2 | 2.414 | } B |
| 2 | MgF2 | 0.803 | |
| 3 | TiO2 | 0.713 | } A |
| 4 | Al2O3 | 1.497 | |
| 5 | TiO2 | 1.534 | } B |
| 6 | MgF2 | 2.458 | |
| 7 | TiO2 | 0.773 | } A |
| 8 | Al2O3 | 1.197 | |
| 9 | TiO2 | 1.398 | |
| 10 | Al2O3 | 1.169 | |
| 11 | TiO2 | 1.263 | |

TABLE 2.

| LAYER | MATERIAL | THICKNESS OF FILM (λ/4) | |
|---|---|---|---|
| 1 | TiO2 | 4.425 | } A |
| 2 | Al2O3 | 1.748 | |
| 3 | TiO2 | 1.898 | } B |
| 4 | MgF2 | 1.102 | |
| 5 | TiO2 | 0.575 | } A |
| 6 | Al2O3 | 1.840 | |
| 7 | TiO2 | 1.100 | |
| 8 | Al2O3 | 1.869 | |
| 9 | TiO2 | 1.629 | } B |
| 10 | MgF2 | 1.804 | |
| 11 | TiO2 | 0.636 | } A |
| 12 | Al2O3 | 1.296 | |
| 13 | TiO2 | 0.939 | |

TABLE 3.

| LAYER | MATERIAL | THICKNESS OF FILM ($\lambda/4$) | |
|---|---|---|---|
| 1 | TiO₂ | 1.236 | ← A |
| 2 | Al₂O₃ | 1.114 | |
| 3 | MgF₂ | 1.042 | ← B |
| 4 | TiO₂ | 0.816 | ← A |
| 5 | Al₂O₃ | 1.052 | |
| 6 | MgF₂ | 1.149 | ← B |
| 7 | TiO₂ | 0.813 | ← A |
| 8 | Al₂O₃ | 1.138 | |
| 9 | MgF₂ | 0.615 | ← A |
| 10 | TiO₂ | 0.967 | |

TABLE 4.

| LAYER | MATERIAL | THICKNESS OF FILM ($\lambda/4$) | |
|---|---|---|---|
| 1 | TiO₂ | 1.909 | }A |
| 2 | Al₂O₃ | 4.369 | |
| 3 | TiO₂ | 3.723 | }B |
| 4 | MgF₂ | 3.126 | |
| 5 | TiO₂ | 2.595 | |
| 6 | Al₂O₃ | 1.404 | }A |
| 7 | TiO₂ | 1.164 | |
| 8 | Al₂O₃ | 1.687 | |
| 9 | TiO₂ | 3.639 | }B |
| 10 | MgF₂ | 1.759 | |
| 11 | TiO₂ | 3.126 | }A |
| 12 | Al₂O₃ | 1.208 | |
| 13 | TiO₂ | 1.178 | |
| 14 | Al₂O₃ | 1.443 | |
| 15 | TiO₂ | 2.453 | }B |
| 16 | MgF₂ | 1.659 | |
| 17 | TiO₂ | 1.530 | }A |
| 18 | Al₂O₃ | 1.998 | |
| 19 | TiO₂ | 1.619 | |

EP 0 601 862 A1

TABLE 5,

| LAYER | MATERIAL | THICKNESS OF FILM |
|---|---|---|
| | | $(\lambda/4)$ |
| 1 | $HfO_2$ | 0.758 |
| 2 | $SiO_2$ | 0.879 |
| 3 | $TiO_2$ | 0.444 |
| 4 | $Al_2O_3$ | 1.404 |
| 5 | $TiO_2$ | 1.361 |
| 6 | $Al_2O_3$ | 1.462 |
| 7 | $TiO_2$ | 1.286 |
| 8 | $SiO_2$ | 1.734 |
| 9 | $TiO_2$ | 1.131 |
| 10 | $Al_2O_3$ | 1.332 |
| 11 | $TiO_2$ | 1.144 |
| 12 | $Al_2O_3$ | -1.322 |
| 13 | $TiO_2$ | 0.886 |
| 14 | $SiO_2$ | 1.211 |
| 15 | $TiO_2$ | 0.075 |
| 16 | $Al_2O_3$ | 1.210 |
| 17 | $TiO_2$ | 1.078 |
| 18 | $Al_2O_3$ | 0.667 |
| 19 | $TiO_2$ | 2.298 |

**Claims**

1.  A optical device, comprising:
    a optical substrate; and
    multiple layers of optical film each made of one of at least three different types of optical materials, said multiple layers of optical film disposed on at least one surface of said optical substrate to eliminate the dependency of angle of incident light directed to said optical substrate.

2.  An optical device according to Claim 1, wherein said optical substrate is a set of prisms with said multiple layers of optical film disposed therebetween defining a beam splitter.

3.  An optical device according to Claim 1, wherein said three different types of optical material have the

15

relationship:

$$\phi_o + 3° \leqq \phi B_1$$
$$\phi_o - 10° \leqq \phi B_2 \leqq \phi_o$$
$$RO_1 \geqq 0.5\%$$
$$RO_2 \geqq 0.5\%,$$

where

- $\Theta_o$ is the central value within the range of the incident angle of the light striking the multiple layers of optical film;
- $\Theta B_1$ is the corrected Brewster angle relative to the substrate which occurs at a border between two layers of optical film of different type materials that are adjacent to each other;
- $\Theta B_2$ is the corrected Brewster angle relative to the substrate which occurs at a border between layers consisting of another two types of optical film that are adjacent to each other;
- $n_s$ is the refractive index of the substrate;
- $RO_1$ is the reflectivity of the first border at incident angle O;
- $RO_2$ is the reflectivity of the second border at incident angle O;
- $\phi_o = 45° + \arcsin \{ (1/n_s) \sin (\Theta_O - 45°) \}$;
- $\phi B_1 = 45° + \arcsin \{ (1/n_s) \sin (\Theta B_1 - 45°) \}$; and
- $\phi B_2 = 45° + \arcsin \{ (1/n_s) \sin (\Theta B_2 - 45°) \}$.

4. An optical device according to Claim 2, wherein said three different types of optical material have the relationship:

$$\phi_o + 3° \leqq \phi B_1$$
$$\phi_o - 10° \leqq \phi B_2 \leqq \phi_o$$
$$RO_1 \geqq 0.5\%$$
$$RO_2 \geqq 0.5\%,$$

where

- $\Theta_o$ is the central value within the range of the incident angle of the light striking the multiple layers of optical film;
- $\Theta B_1$ is the corrected Brewster angle relative to the substrate which occurs at a border between two layers of optical film of different type materials that are adjacent to each other;
- $\Theta B_2$ is the corrected Brewster angle relative to the substrate which occurs at a border between layers consisting of another two types of optical film that are adjacent to each other;
- $n_s$ is the refractive index of the substrate;
- $RO_1$ is the reflectivity of the first border at incident angle O;
- $RO_2$ is the reflectivity of the second border at incident angle O;
- $\phi_o = 45° + \arcsin \{ (1/n_s) \sin (\Theta_O - 45°) \}$;
- $\phi B_1 = 45° + \arcsin \{ (1/n_s) \sin (\Theta B_1 - 45°) \}$; and
- $\phi B_2 = 45° + \arcsin \{ (1/n_s) \sin (\Theta B_2 - 45°) \}$.

5. An optical device according to claim 3, wherein the values $\phi B_1$ and $\phi B_2$ fulfill the condition that $| \phi B_1 - \phi B_2 | \geqq 5°$, and said multiple layers of optical film comprise at least six layers.

6. An optical device according to Claim 4, wherein the values $\phi B_1$ and $\phi B_2$ fulfill the condition that $| \phi B_1 - \phi B_2 | \geqq 5°$, and said multiple layers of optical film comprise at least six layers.

7. An optical device according to Claim 3, wherein said values $\phi O$, $\phi B_1$ and $\phi B_2$ fulfill the condition that,
$$\phi_o - \phi B_2 < \phi B_1 - \phi_o$$

8. An optical device according to Claim 4, wherein said values $\phi O$, $\phi B_1$ and $\phi B_2$ fulfill the condition that,
$$\phi_o - \phi B_2 < \phi B_1 - \phi_o$$

9. An optical device according to Claim 1, wherein said multiple layers of optical film comprise at least six layers such that the number of borders of a first material type is greater than the number of borders of a second material type.

10. An optical device according to Claim 1, wherein the refractive index $n_s$ of said optical substrate is at least 1.6.

11. An optical device according to Claim 1, wherein said at least three different types of materials contain as a main component one selected from the group consisting of Ti oxide, Al oxide, Mg fluoride, Hf oxide, and Si oxide.

12. An optical device according to Claim 1, wherein said at least three different types of materials contain as a main components one selected from the group consisting of Ti oxide, Al oxide, and Mg fluoride.

13. An optical device according to Claim 1, wherein said at least three different types of materials contain as a main components one selected from the group consisting of Ti oxide, Al oxide and Si oxide.

14. An optical device according to Claim 1, wherein said multiple layers of optical film fulfill the conditions that:

$$\phi_o + 3° \leqq \phi B_1$$
$$\phi_o \leqq \phi B_2 \leqq \phi_o + 25°$$
$$RO_1 \geqq 0.8\%$$
$$RO_2 \geqq 0.8\%$$
$$\phi B_1 \geqq \phi B_2$$

when $\Theta_o$, $\Theta B_1$, $\Theta B_2$, $n_s$, $R_1$, $RO_2$, $\phi_o$, $\phi B_1$ and $\phi B_2$ have the values given in Paragraph 2.

15. An optical device according to Claim 14, wherein the values $RO_1$ and $RO_2$ fulfill the condition that:
$$| RO_1 - RO_2 | > 2.5\%$$

16. An optical device according to Claim 1, wherein said multiple layers of optical film comprise at least six layers to provide a first type of border greater in numbers than a second type of border.

17. An optical device according to Claim 1, wherein said refractive index $n_s$ of said optical substrate is less than 1.6.

18. An optical device according to Claim 1, wherein said at least three different types of materials each contains as a main components one selected from the group consisting of Ti oxide, Al oxide, Mg fluoride, Hf oxide, and Si oxide.

19. An optical device according to Claim 1, wherein said at least three different types of materials each contains as a main component one selected from the group consisting of Ti oxide, Al oxide, and Mg fluoride.

20. An optical device according to Claim 1, wherein said at least different types of materials contain as a main component one selected from the group consisting of Ti oxide, Al oxide, and Si oxide.

21. An optical device according to Claim 1, wherein the total number of borders of a first type and a second type accounts for the majority of borders between said multiple layers of optical film.

22. An optical device according to Claim 1, wherein said at least three different types of materials are designated a, b and c, and a first type of border A is defined between materials a and b, and a second type of border B is defined between materials a and c.

23. An optical device according to Claim 22, wherein said at least three layers are made of material at an occuranence greater than with the other materials.

24. An optical device according to Claim 22, wherein said first type A and second type B of said borders occur greater than other types of borders.

25. An optical device according to Claim 22, wherein none of the borders occur between layers of optical film made of materials b and c.

26. An optical device according to Claim 22, wherein one border occurs between layers of optical film made of materials b and c.

27. An optical device according to Claim 22, wherein said layers of optical film are arranged in the sequence a, b, a, b, a, c, a, b.

28. An optical device according to Claim 22, wherein each of the layers of optical film made of materials a, b and c are defined by multiple sublayers,; and in at least one of said sublayers is made of material other than materials a, b, and c.

29. An optical device according to Claim 22, wherein a main component of said material a is Ti oxide; a main component of said material b is Al oxide; and a main component of said material c is Mg fluoride.

30. An optical device according to Claim 22, wherein a main component of said material a is Ti oxide; a main component of said material b is Al oxide; and a main component of said material c is Si oxide.

31. An optical device according to Claim 28, wherein said sublayer of other material has a higher refractive index than any sublayers made of materials a, b, and c.

32. An optical device according to Claim 28, wherein said sublayer of other material has a main component of Hf oxide.

33. A device to record and reproduce optical data on an optical recording medium, comprising:
   a luminous element projecting a light beam onto the optical recording medium;
   a beam splitter comprising a set of prisms with multiple layers of optical film each made of one of at least three different types of optical materials disposed between said prisms to eliminate the dependency of angle of incident light directed to said optical substrate.

34. An optical device according to Claim 2, wherein said at least three different types of materials are designated materials a, b and c, and a first type of border A is defined between layers of optical films made of materials a and b, and a second type of border B is defined between layers of optical films made of materials a and c.

35. An optical device according to Claim 34, wherein said layers of optical film are made of material a occurring greater that those consisting of the other materials.

36. An optical device according to Claim 34, where said first and second types of borders A and B occur more often than other types of borders.

37. An optical device according to Claim 34, wherein none of the borders are between the layers of optical film made of materials b and c.

38. An optical device according to Claim 2, including a layer of adhesive binding said prisms together, and a non-reflective layer provided on an inner surface of one of said prism not having said multiple layer of optical film to eliminate reflectance at the interface between the adhesive layer and said surface of said prism.

39. An optical device according to Claim 2, including a layer of adhesive binding said prisms together, and a layer disposed between said adhesive layer and said multiple layers of optical film to prevent water from said adhesive layer or lead from said prism from penetrating into said multiple layers of optical film.

FIG.1

FIG. 2.

FIG. 3.

FIG. 4

TP

RP

REFLECTIVITY (%)

ANGLE OF INCIDENCE

FIG. 5

ANGLE OF INCIDENCE (DEGREES)

PHASE SHIFT

(DEGREES)

FIG.6

FIG. 7

FIG. 8.

FIG. 9.

PHASE SHIFT (DEGREES)

ANGLE OF INCIDENCE (DGREES)

FIG. 10.

FIG. 11.

Fig. 12.

FIG. 13.

FIG. 14.

FIG.15.

FIG. 16.    PRIOR ART

FIG. 17

FIG. 18

FIG. 19

FIG. 20.

PRIOR ART

FIG. 21.

PRIOR ART

TRANSMISSIVITY

REFLECTIVITY

ANGLE OF INCIDENCE (DEGREES)

FIG. 22.

PRIOR ART

ANGLE OF INCIDENCE (DEGREES)

FIG. 23.

PLANE OF POLARIZATION
OF INCIDENT LIGHT

SIGNAL $\delta$

AXIS OF TRANSMISSION
OF PBS

PHASE SHIFT, $\delta = 0$

FIG. 24.

PLANE OF
POLARIZATION
OF INCIDENT LIGHT

SIGNALS $S$

PHASE SHIFT $\delta \neq 0$

FIG. 25.        PRIOR ART

FIG. 26.

FIG. 27.

PRIOR ART

FIG. 28.

PRIOR ART

FIG. 29.

PRIOR ART

FIG. 30.

PRIOR ART

**European Patent Office**

## EUROPEAN SEARCH REPORT

Application Number

EP 93 30 9923

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | US-A-4 733 926 (A.TITLE)<br><br>* the whole document * | 1,2,<br>10-13,<br>18-20,<br>33,38 | G11B7/00<br>G02B27/28<br>G11B11/10<br>G11B7/135 |
| Y | EP-A-0 336 334 (ALCATEL CIT)<br><br>* page 4; figures 1-4 * | 1,2,<br>10-13,<br>18-20,<br>33,38 | |
| Y | PATENT ABSTRACTS OF JAPAN<br>vol. 014, no. 249 (P-1053)28 May 1990<br>& JP-A-02 064 917 (NHK SPRING) 5 March 1990<br>* abstract * | 33 | |

TECHNICAL FIELDS
SEARCHED      (Int.Cl.5)

G02B
G11B

The present search report has been drawn up for all claims

| Place of search | Date of completion of the search | Examiner |
|---|---|---|
| THE HAGUE | 24 March 1994 | Malic, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)